# EUROPEAN PATENT SPECIFICATION

(11) **EP 0 956 522 B1**
(45) Date of publication and mention of the grant of the patent: **02.05.2002**
(21) Application number: 98949242.6
(22) Date of filing: 01.10.1998
(51) Int. Cl.: G05D 1/02

(54) **A VEHICLE COMBINATION**
FAHRZEUGKOMBINATION
VEHICULE COMBINE

(30) Priority: 08.10.1997 NL 1007225
(43) Date of publication of application: 17.11.1999
(73) Proprietor: MAASLAND N.V., 3155 PD Maasland (NL)
(72) Inventor: VAN DER LELY, Olaf, CH-6300 Zug (CH)
(74) Representative: Corten, Maurice Jean F.M.
(86) International application number: PCT/NL98/00569
(87) International publication number: WO 99/18482

(56) References cited:
- WO-A-93/18952
- WO-A-95/30556
- FR-A- 2 664 716
- FR-A- 2 760 316
- GB-A- 2 215 281
- US-A- 4 771 838
- US-A- 5 330 020
- US-A- 5 546 093
- AMAT J ET AL: "A TRACKING SYSTEM FOR DYNAMIC CONTROL OF CONVOYS" ROBOTICS AND AUTONOMOUS SYSTEMS, vol. 11, no. 3/04, 1 December 1993, pages 269-277, XP000414333

## Description

The invention relates to a method of controlling a vehicle combination comprising a master vehicle, such as e.g. an agricultural tractor with a control system for controlling a satellite vehicle.

Such a method is for example known from FR-A-2,760,316 (prior art under Art. 54(3) EPC) or Amat J. et al: "A tracking system for dynamic control f convoys", Robotics and Autonomous Systems, vol. 11, no. 3/04, 1 December 1993, pages 269-277, XP000414333.

It is an object of the invention to provide an alternative method.

Hereto a method of the sort as defined above is according to the invention characterized in that in the method a master vehicle and the satellite vehicle provided with coupling means with the aid of which the satellite vehicle can be coupled to the master vehicle are used, said method comprising the steps of:
a) uncoupling the satellite vehicle from the master vehicle,
b) driving the satellite vehicle by means of a manual control mechanism to a tramline or working pass on a parcel, and
c) after the satellite vehicle has been positioned properly relative to the tramline, choosing a determined instruction program, such as driving parallel to the master vehicle, for the satellite vehicle.

Further embodiments of the method in accordance with the invention are described in claims 2 to 4.

The invention also relates to a method of controlling a vehicle combination comprising a master vehicle, such as e.g. an agricultural tractor with a control system for controlling a satellite vehicle, characterized in that the master vehicle and the satellite vehicle are provided with coupling means with the aid of which the satellite vehicle can be coupled to the master vehicle, in that the control system comprises a manual control mechanism by means of which the satellite vehicle can be controlled manually, and in that by means of the control system different instruction programs for the satellite vehicle can be started up, e.g. for making the agricultural tractor and the satellite vehicle drive parallel to each other and/or for following the track of the master vehicle. Thus it is also possible to switch the control system to manual control, so that the satellite vehicle can be controlled by hand. This may in particular be important when at the end of the working pass the satellite vehicle has to be turned for being positioned in a new working pass. If this is effected automatically, there will be required relatively much equipment, whereas it can be performed quickly, cheaply and efficiently by means of a simple manual control mechanism. In this manner the driver of the master vehicle can pay all his attention to driving the vehicle and has not to take the satellite vehicle into consideration. For example, the driver can choose an instruction program for making e.g. the master vehicle and the satellite vehicle drive parallel to each other and/or for following the track of the master vehicle. In the first situation two operations can take place beside each other, while in the second situation two operations can take place behind each other. It will be obvious that depending on the kind of operation different instruction programs can be started up c.q. be programmed.

According to an inventive feature the satellite vehicle is used as an implement carrier or is designed as a transport wagon, a mower-thresher or any other self-propelled agricultural implement.

The vehicle combination according to the invention has the advantage that a person can work with two or more implements at the same time, while the working width is at least doubled.

For the purpose of controlling the satellite vehicle, according to an inventive feature the control system is designed as a remote control system, such as a radiographic remote control system and/or a cable connection between the master vehicle and the satellite vehicle.

In order to keep the distance between the satellite vehicle and the master vehicle equal, according to an inventive feature the master vehicle and/or the satellite vehicle comprise(s) distance measuring means with the aid of which the distance between the master vehicle and the satellite vehicle is determined.

According to an inventive feature the master vehicle and/or the satellite vehicle comprise(s) angle measuring means with the aid of which the angle(s) between the master vehicle and one or more satellite vehicles can be determined. In this manner, in cooperation with the distance measuring means, the position of a satellite vehicle relative to the master vehicle can be determined and, if required, on the basis thereof the direction and/or the speed of one of the two vehicles can be adjusted.

In accordance with again another aspect of the invention, the master vehicle and/or the satellite vehicle comprise(s) driving speed sensors by means of which the driving speed of the two vehicles can be determined.

According to a further inventive feature the master vehicle and/or the satellite vehicle comprise(s) track-following means, such as e.g. a camera with picture analysis, or a mechanical feeler element for following a track/tramline.

For the purpose of realizing precision-farming by means of the vehicle combination, according to a further aspect of the invention the master vehicle and/or the satellite vehicle comprise(s) a navigation system, such as e.g. GPS, with the aid of which the position of the master vehicle and/or the satellite vehicle can be defined.

According to again another inventive feature the satellite vehicle is provided with a camera and the master vehicle is provided with a monitor which receives the pictures from the camera and shows them on a screen. In this manner the driver of the master vehicle can supervise the satellite vehicle. In a preferred embodiment of the invention, there is disposed a camera both at the front and the rear side of the satellite vehicle. Because of this measure the driver of the master vehicle can closely watch the course of the satellite vehicle, while also the function of an agricultural implement coupled to the satellite vehicle can be checked.

According to again another inventive feature the satellite vehicle is provided with further coupling means with the aid of which agricultural implements, such as a fertilizer spreader, a seeder, a field sprayer, a mower and a hay-making machine, can be coupled to the satellite vehicle.

In accordance with another inventive feature the vehicle combination is provided with an implement control system for controlling an implement, which control system is designed such that also other implements disposed on the master vehicle and/or a satellite vehicle can be controlled by the relevant implement control system. Because of this measure a plurality of implements can be controlled by means of one implement control system.

The invention will be explained in further detail with reference to an accompanying drawing.

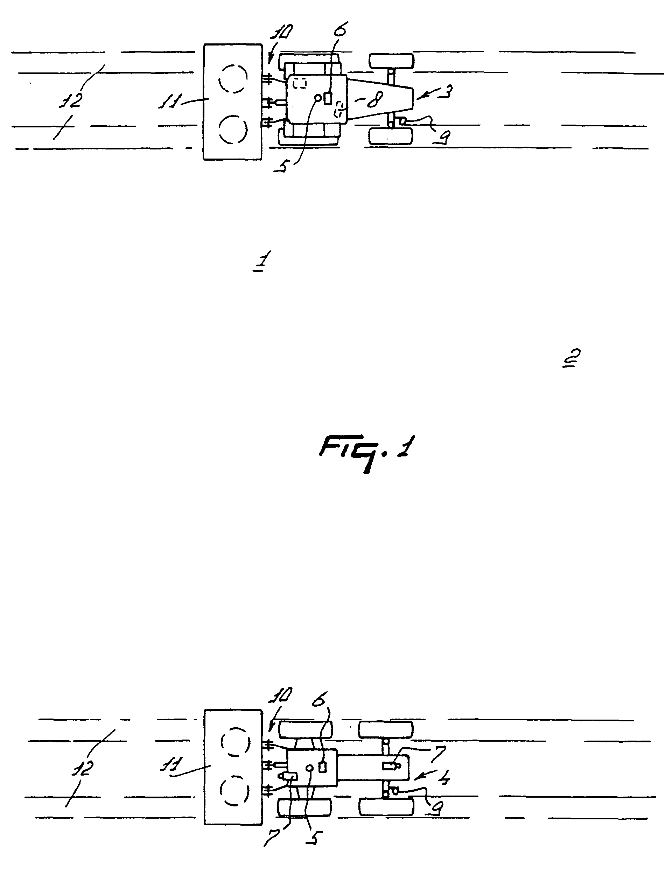

Figure 1 is a plan view of a vehicle combination in accordance with the invention.

Figure 1 shows a vehicle combination 1 which is active on a parcel 2. The vehicle combination 1 comprises a master vehicle which is designed in the present embodiment as an agricultural tractor 3 as well as a satellite vehicle 4 which is active at some distance therefrom. The satellite vehicle 4 is an unmanned vehicle that is provided with an own power supply.

Both the agricultural tractor 3 and the satellite vehicle are provided with a (non-shown) control system for controlling the satellite vehicle 4. In the present embodiment the communication between the agricultural tractor 3 and the satellite vehicle 4 takes place via a radiographic connection. As a consequence thereof both the agricultural tractor and the satellite vehicle 4 comprise an aerial 5. However, it is also possible to have the communication between the two vehicles or a plurality of vehicles take place by means of a cable connection.

The control system additionally comprises (non-shown) switch means with the aid of which an instruction program for a relevant satellite vehicle 4 can be started up. In the present embodiment the program for parallel driving has been chosen. The agricultural tractor 3 and the satellite vehicle 4 are further provided with distance measuring means 6 with the aid of which the distance between the agricultural tractor 3 and the satellite vehicle 4 can be determined. If a given distance between the two vehicles has been chosen and one of the vehicles deviates therefrom, this deviation can be adjusted automatically by means of the control system.

For the purpose of realizing e.g. precision-farming by means of the vehicle combination 1, it is possible to connect the control system to a navigation system, such as GPS, and/or a yield mapping system.

Near its front and rear side the satellite vehicle 4 is further provided with a camera 7 by means of which pictures both of the front side and the rear side of the satellite vehicle 4 can be received. These pictures are transmitted via the aerial 5 to the agricultural tractor 3 where the pictures can be shown on a monitor 8 disposed in the agricultural tractor 3. The satellite vehicle 4 is additionally provided with a speed sensor 9 by means of which the speed of the satellite vehicle 4 can be determined. The signal supplied by the speed sensor 9 is transmitted via the aerial 5 to the control system in the agricultural tractor 3. The agricultural tractor 3 is also provided with a speed sensor 9 by means of which the driving speed of the agricultural tractor 3 can be determined and whose signal is also supplied to the control system. In this manner the speed of the agricultural tractor 3 and that of one or more satellite vehicles 4 can be mutually attuned.

Both the agricultural tractor 3 and the satellite vehicle 4 are provided near their rear sides with a three-point lifting hitch 10 to which, in the present embodiment, centrifugal spreaders 11 are coupled. It will be obvious that it will also be possible to dispose, near the front sides of both the agricultural tractor and the satellite vehicle 4, coupling means to which the agricultural implement can be coupled.

The present vehicle combination 1 functions as follows:

After the satellite vehicle 4 has been uncoupled from the agricultural tractor 3, by means of the manual control mechanism the satellite vehicle 4 can be driven by the tractor driver to a tramline 12 on the parcel 2. After the satellite vehicle 4 has been positioned properly relative to the tramline 12, which can be checked e.g. by the camera or by means of the GPS navigation system, the tractor driver chooses the control program for parallel driving. This implies that there is automatically driven at a predetermined driving speed, which is checked by means of the speed sensor 9. Furthermore there is determined with the aid of the distance measuring means 6 whether the satellite vehicle 4 is driving parallel to the agricultural tractor 3. If one of the vehicles deviates as regards speed or direction from the predetermined tramline, the control system ensures that the relevant vehicle is adjusted. By means of the control program the two centrifugal spreaders 11 can also be controlled so as to drive parallel to each other. In this manner it is possible to spread e.g. 36 metres or more in one working pass by means of the centrifugal spreaders 11. As a result thereof the capacity is doubled. When the vehicle combination 1 has arrived at the end of the parcel, the tractor driver can switch to manual control with the aid of the switch means. This results in automatic switching off of the centrifugal spreaders 11 or any other agricultural implements. Subsequently the tractor driver can move the satellite vehicle 4 along the headland of the parcel 2 towards a new working pass, which in the present situation is a next tramline. By means of the camera 7 and optionally the GPS navigation system, the tractor driver can check whether the satellite vehicle 4 is correctly positioned relative to the tramline. Then the tractor driver can drive the agricultural tractor 3 to a next tramline and start up the program for parallel driving again, whereafter a next working pass is spread. After the whole parcel 2 has been spread, the satellite vehicle 4 can be coupled to the rear side of the agricultural tractor 3 by means of (non-shown) coupling means, for the purpose of transporting said satellite vehicle 4 to a next parcel or to the farm.

## Claims

1. A method of controlling a vehicle combination comprising a master vehicle, such as e.g. an agricultural tractor (3) with a control system for controlling a satellite vehicle (4), **characterized in that** in the method a master vehicle (3) and the satellite vehicle (4) provided with coupling means with the aid of which the satellite vehicle (4) can be coupled to the master vehicle (3) are used, said method comprising the steps of:
a) uncoupling the satellite vehicle (4) from the master vehicle (3),
b) driving the satellite vehicle (4) by means of a manual control mechanism to a tramline (12) or working pass on a parcel (2), and
c) after the satellite vehicle (4) has been positioned properly relative to the tramline (12), choosing a determined instruction program in the control system, such as driving parallel to the master vehicle, for the satellite vehicle (4).

2. A method as claimed in claim 1, **characterized in that,** the method further comprises the step of:
d) switching to manual control with the aid of the switch means when the vehicle combination (1) has arrived at the end of the parcel (2), said switching to manual control resulting in automatic switching off any agricultural implements.

3. A method as claimed in claim 2, **characterized in that,** the method further comprises the step of:
e) subsequently to step d) moving the satellite vehicle (4) along the end of the parcel (2) towards anew tramline, or working pass,
f) then driving the master vehicle (3) to a next tramline or working pass, and
g) starting up the determined instruction program again.

4. A method as claimed in claim 3, **characterized in that,** the method comprises the step of:
h) after the vehicle combination has been active on the parcel (2), the satellite vehicle (4) is coupled to the master vehicle (3) by means of coupling means, for the purpose of transporting said satellite vehicle (4).

5. A vehicle combination comprising a master vehicle, such as e.g. an agricultural tractor (3) with a control system for controlling a satellite vehicle (4), **characterized in that** the master vehicle (3) and the satellite vehicle (4) are provided with coupling means with the aid of which the satellite vehicle (4) can be coupled to the master vehicle (3), **in that** the control system comprises a manual control mechanism by means of which the satellite vehicle (4) can be driven to a tramline (12) or working pass on a parcel (2) after being uncoupled from the master vehicle (3), and **in that** by means of the control system different instruction programs for the satellite vehicle (4) can be started up, e.g. for making the agricultural tractor (3) and the satellite vehicle (4) drive parallel to each other and/or for following the track of the master vehicle (3).

6. A vehicle combination as claimed in claim 5, **characterized in that** the satellite vehicle is used as an implement carrier or is designed as a transport vehicle, a mower-thresher or any other self-propelled agricultural implement.

7. A vehicle combination as claimed in claim 5 or 6, **characterized in that** the control system is designed as a remote control system, such as a radiographic remote control system and/or a control system by means of a cable connection.

8. A vehicle combination as claimed in claim 7, **characterized in that** an implement carried or drawn by the satellite vehicle and/or the self-propelled agricultural implement can be controlled automatically or manually by means of the remote control system.

9. A vehicle combination as claimed in any one of the preceding claims 5 to 8, **characterized in that** the master vehicle (3) and/or the satellite vehicle (4) comprise (s) distance measuring means (6) with the aid of which the distance between the master vehicle (3) and the satellite vehicle (4) is determined.

10. A vehicle combination as claimed in any one of the preceding claims 5 to 9, **characterized in that** the master vehicle (3) and/or the satellite vehicle (4) comprise(s) angle measuring means with the aid of which the angle(s) between the master vehicle (3) and one or more satellite vehicles (4) can be determined.

11. A vehicle combination as claimed in any one of the preceding claims 5 to 10, **characterized in that** the master vehicle (3) and/or the satellite vehicle (4) comprise(s) driving speed sensors by means of which the respective driving speeds of the two vehicles can be determined.

12. A vehicle combination as claimed in any one of the preceding claims 5 to 11, **characterized in that** the master vehicle (3) and/or the satellite vehicle (4) comprise(s) track-following means, such as e.g. a camera with picture analysis, or a mechanical feeler element for following a track/tramline.

13. A vehicle combination as claimed in any one of the preceding claims 5 to 12, **characterized in that** the master vehicle (3) and/or the satellite vehicle (4) comprise(s) a navigation system, such as e.g. GPS, with the aid of which the position of the master vehicle (3) and/or the satellite vehicle (4) can be defined.

14. A vehicle combination as claimed in any one of the preceding claims 5 to 13, **characterized in that** the satellite vehicle (4) is provided with a camera (7), and the master vehicle (3) is provided with a monitor (8) which receives the pictures from the camera and shows them on a screen.

15. A vehicle combination as claimed in claim 14, **characterized in that** near the front side and the rear side of the satellite vehicle (4) there is disposed a camera (7).

16. A vehicle combination as claimed in any one of the preceding claims 5 to 15, **characterized in that** the satellite vehicle (4) is provided with further coupling means (10) with the aid of which agricultural implements, such as a fertilizer spreader (11), a seeder, a field sprayer, a mower and a hay-making machine, can be coupled to the satellite vehicle (4).

17. A vehicle combination as claimed in any one of the preceding claims 5 to 16, **characterized in that** the vehicle combination is provided with an implement control system for controlling an implement, which control system is designed such that also other implements disposed on the master vehicle (3) and/or another satellite vehicle can be controlled by the relevant implement control system.

## Patentansprüche

1. Verfahren zum Steuern einer Fahrzeugkombination, die ein Leitfahrzeug, wie z. B. einen landwirtschaftlichen Schlepper (3), mit einem Steuersystem zum Steuern eines Satellitenfahrzeuges (4) umfaßt,
**dadurch gekennzeichnet, daß** bei dem Verfahren ein Leitfahrzeug (3) sowie das Satellitenfahrzeug (4), das mit Anschlüssen versehen ist, mit deren Hilfe das Satellitenfahrzeug (4) an das Leitfahrzeug (3) angeschlossen werden kann, verwendet werden, wobei das Verfahren folgende Verfahrensschritte umfaßt:
a) Abkoppeln des Satellitenfahrzeuges (4) von dem Leitfahrzeug (3),
b) Fahren des Satellitenfahrzeuges (4) mit Hilfe eines manuellen Steuermechanismus zu einer Fahrrille (12) oder Arbeitsspur auf einer Parzelle (2) und
c) nach ordnungsgemäßer Positionierung des Satellitenfahrzeuges (4) relativ zu der Fahrrille (12) Wählen eines bestimmten Befehlsprogramms für das Satellitenfahrzeug (4) in dem Steuersystem, wie z. B. das Fahren parallel zum Leitfahrzeug.

2. Verfahren nach Anspruch 1,
**dadurch gekennzeichnet, daß** das Verfahren ferner folgenden Verfahrensschritt umfaßt:
d) Umschalten auf manuelle Steuerung mit Hilfe der Schaltvorrichtung, wenn die Fahrzeugkombination (1) am Ende der Parzelle (2) angekommen ist, wobei das Umschalten auf manuelle Steuerung das automatische Abschalten aller landwirtschaftlichen Geräte zur Folge hat.

3. Verfahren nach Anspruch 2,
**dadurch gekennzeichnet, daß** das Verfahren ferner folgenden Verfahrensschritt umfaßt:
e) Im Anschluß an Verfahrensschritt d) Bewegen des Satellitenfahrzeuges (4) am Ende der Parzelle (2) entlang zu einer neuen Fahrrille oder Arbeitsspur,
f) sodann Fahren des Leitfahrzeuges (3) zu einer weiteren Fahrrille oder Arbeitsspur und
g) erneutes Starten des bestimmten Befehlsprogramms.

4. Verfahren nach Anspruch 3,
**dadurch gekennzeichnet, daß** das Verfahren folgenden Verfahrensschritt umfaßt:
h) nach dem Einsatz der Fahrzeugkombination auf der Parzelle (2) Anschließen des Satellitenfahrzeuges (4) an das Leitfahrzeug (3) mit Hilfe von Anschlüssen, um das Satellitenfahrzeug (4) zu transportieren.

5. Fahrzeugkombination, die ein Leitfahrzeug, wie z. B. einen landwirtschaftlichen Schlepper (3), mit einem Steuersystem zum Steuern eines Satellitenfahrzeuges (4) umfaßt,
**dadurch gekennzeichnet, daß** das Leitfahrzeug (3) und das Satellitenfahrzeug (4) mit Anschlüssen versehen sind, mittels derer das Satellitenfahrzeug (4) an das Leitfahrzeug (3) angeschlossen werden kann, daß das Steuersystem einen manuellen Steuermechanismus umfaßt, mit dessen Hilfe das Satellitenfahrzeug (4) nach dem Abkoppeln von dem Leitfahrzeug (3) zu einer Fahrrille (12) oder Arbeitsspur auf einer Parzelle (2) gefahren werden kann, und daß mit Hilfe des Steuersystems unterschiedliche Befehlsprogramme für das Satellitenfahrzeug (4) gestartet werden können, beispielsweise um zu bewirken, daß der landwirtschaftliche Schlepper (3) und das Satellitenfahrzeug (4) parallel zueinander fahren, und/oder um der Spur des Leitfahrzeuges (3) zu folgen.

6. Fahrzeugkombination nach Anspruch 5,
**dadurch gekennzeichnet, daß** das Satellitenfahrzeug als Geräteträger verwendet wird oder als Transportfahrzeug, Mähdrescher oder beliebiges sonstiges landwirtschaftliches Gerät mit eigenem Antrieb ausgeführt ist.

7. Fahrzeugkombination nach Anspruch 5 oder 6,
**dadurch gekennzeichnet, daß** das Steuersystem als Fernsteuerung, wie z. B. Funkfernsteuerung und/oder Steuerung mittels einer elektrischen Leitung, ausgeführt ist.

8. Fahrzeugkombination nach Anspruch 7,
**dadurch gekennzeichnet, daß** ein von dem Satellitenfahrzeug getragenes oder gezogenes Gerät und/oder das landwirtschaftliche Gerät mit eigenem Antrieb mit Hilfe der Fernsteuerung automatisch oder manuell gesteuert werden kann.

9. Fahrzeugkombination nach einem der vorhergehenden Ansprüche 5 bis 8,
**dadurch gekennzeichnet, daß** das Leitfahrzeug (3) und/oder das Satellitenfahrzeug (4) eine Entfernungsmeßvorrichtung (6) umfassen/umfaßt, mit dessen Hilfe die Entfernung zwischen dem Leitfahrzeug (3) und dem Satellitenfahrzeug (4) gemessen wird.

10. Fahrzeugkombination nach einem der vorhergehenden Ansprüche 5 bis 9,
**dadurch gekennzeichnet, daß** das Leitfahrzeug (3) und/oder das Satellitenfahrzeug (4) eine Winkelmeßvorrichtung umfassen/umfaßt, mit deren Hilfe der/die Winkel zwischen dem Leitfahrzeug (3) und einem oder mehreren Satellitenfahrzeugen (4) gemessen werden kann/können.

11. Fahrzeugkombination nach einem der vorhergehenden Ansprüche 5 bis 10,
**dadurch gekennzeichnet, daß** das Leitfahrzeug (3) und/oder das Satellitenfahrzeug (4) Fahrgeschwindigkeitssensoren umfassen/umfaßt, mit deren Hilfe die jeweilige Fahrgeschwindigkeit der beiden Fahrzeuge gemessen werden kann.

12. Fahrzeugkombination nach einem der vorhergehenden Ansprüche 5 bis 11,
**dadurch gekennzeichnet, daß** das Leitfahrzeug (3) und/oder das Satellitenfahrzeug (4) eine Spurfolgevorrichtung, wie z. B. eine Kamera mit Bildanalyse, oder ein mechanisches Fühlerelement umfassen/umfaßt, um einer Spur/Fahrrille zu folgen.

13. Fahrzeugkombination nach einem der vorhergehenden Ansprüche 5 bis 12,
**dadurch gekennzeichnet, daß** das Leitfahrzeug (3) und/oder das Satellitenfahrzeug (4) ein Navigationssystem, wie z. B. GPS, umfassen/umfaßt, mit dessen Hilfe die Position des Leitfahrzeuges (3) und/oder des Satellitenfahrzeuges (4) bestimmt werden kann.

14. Fahrzeugkombination nach einem der vorhergehenden Ansprüche 5 bis 13,
**dadurch gekennzeichnet, daß** das Satellitenfahrzeug (4) mit einer Kamera (7) und das Leitfahrzeug (3) mit einem Bildschirm (8) versehen ist, der die Bilder von der Kamera empfängt und sie auf einem Bildschirm anzeigt.

15. Fahrzeugkombination nach Anspruch 14,
**dadurch gekennzeichnet, daß** nahe der Vorderseite und der Rückseite des Satellitenfahrzeuges (4) eine Kamera (7) angeordnet ist.

16. Fahrzeugkombination nach einem der vorhergehenden Ansprüche 5 bis 15,
**dadurch gekennzeichnet, daß** das Satellitenfahrzeug (4) mit weiteren Anschlüssen (10) versehen ist, mit deren Hilfe landwirtschaftliche Geräte, wie z. B. ein Düngerstreuer (11), eine Sämaschine, eine Feldspritze, eine Mähmaschine und eine Heuwerbungsmaschine, an das Satellitenfahrzeug (4) angeschlossen werden können.

17. Fahrzeugkombination nach einem der vorhergehenden Ansprüche 5 bis 16,
**dadurch gekennzeichnet, daß** die Fahrzeugkombination mit einem Gerätesteuersystem zum Steuern eines Gerätes versehen ist, wobei das Steuersystem derart ausgebildet ist, daß auch andere an dem Leitfahrzeug (3) und/oder einem weiteren Satellitenfahrzeug angeordnete Geräte von dem jeweiligen Gerätesteuersystem gesteuert werden können.

## Revendications

1. Procédé de commande d'un véhicule combiné comprenant un véhicule maître, tel que, par exemple, un tracteur agricole (3) avec un système de commande pour commander un véhicule satellite (4), **caractérisé en ce que**, dans le procédé, un véhicule maître (3) et le véhicule satellite (4) pourvus de moyens formant accouplement à l'aide desquels le véhicule satellite (4) peut être couplé au véhicule maître (3) sont utilisés, ledit procédé comprenant les étapes consistant à :
a) découpler le véhicule satellite (4) du véhicule maître (3),
b) conduire le véhicule satellite (4) au moyen d'un mécanisme de commande manuel vers un sillon (12) ou un parcours de travail sur une parcelle (2) et
c) choisir, après que le véhicule satellite (4) a été positionné correctement par rapport au sillon (12), un programme d'instruction déterminé dans le système de commande, tel qu'une conduite parallèle au véhicule maître, pour le véhicule satellite.

2. Procédé selon la revendication, **caractérisé en ce que** le procédé comprend en outre l'étape consistant à :
d) passer en commande manuelle à l'aide de moyens formant commutateur lorsque le véhicule combiné (1) est arrivé à l'extrémité de la parcelle (2), ledit passage en commande manuelle ayant pour résultat la déconnexion de tous les outils agricoles.

3. Procédé selon la revendication 2, **caractérisé en ce que** le procédé comprend en outre l'étape consistant à :
e) déplacer, suite à l'étape d), le véhicule satellite (4) le long de l'extrémité de la parcelle (2) vers un nouveau sillon ou un passage de travail,
f) puis conduire le véhicule maître (3) vers le sillon ou le passage de travail suivant et
g) recommencer le programme d'instructions déterminé.

4. Procédé selon la revendication 3 **caractérisé en ce que** le procédé comprend l'étape consistant à :
h) après que le véhicule combiné a été actif sur la parcelle (2), le véhicule satellite (4) est couplé au véhicule maître (3) à l'aide de moyens formant accouplement dans le but de transporter ledit véhicule satellite (4).

5. Véhicule combiné comprenant un véhicule maître, tel que, par exemple, un tracteur agricole (3) avec un système de commande pour commander un véhicule satellite (4) **caractérisé en ce que** le véhicule maître (3) et le véhicule satellite (4) sont pourvus de moyens formant accouplement à l'aide desquels le véhicule satellite (4) peut être couplé au véhicule maître (3), **en ce que** le système de commande comprend un mécanisme de commande manuel au moyen duquel le véhicule satellite (4) peut être conduit vers un sillon (12) ou un passage de travail sur une parcelle (2) après avoir été découplé du véhicule maître (3) et **en ce qu'**au moyen du système de commande différents programmes d'instructions pour le véhicule satellite (4) peuvent être démarrés, par exemple pour amener le tracteur agricole (3) et le véhicule satellite (4) à rouler parallèlement l'un par rapport à l'autre et/ou à suivre la trace du véhicule maître (3).

6. Véhicule combiné selon la revendication 5, **caractérisé en ce que** le véhicule satellite est utilisé en tant que transporteur d'outil ou est conçu comme véhicule de transport, moissonneuse-batteuse ou tout autre outil agricole automoteur.

7. Véhicule combiné selon la revendication 5 ou 6 **caractérisé en ce que** le système de commande est conçu en tant que système de commande à distance, tel qu'un système de commande à distance radiographique et/ou un système de commande au moyen d'un raccordement par câble.

8. Véhicule combiné selon la revendication 7 **caractérisé en ce que** un outil transporté ou tiré par le véhicule satellite et/ou l'outil agricole automoteur peut être commandé automatiquement ou manuellement au moyen du système de commande à distance.

9. Véhicule combiné selon l'une quelconque des revendications 5 à 8 **caractérisé en ce que** le véhicule maître (3) et/ou le véhicule satellite (4) comprennent des moyens de mesure de distance (6) à l'aide desquels la distance entre le véhicule maître (3) et le véhicule satellite (4) est déterminée.

10. Véhicule combiné selon l'une quelconque des revendications 5 à 9 **caractérisé en ce que** le véhicule maître (3) et/ou le véhicule satellite (4) comprennent des moyens de mesure d'angle à l'aide desquels 1(es) angle(s) entre le véhicule maître et un ou plus véhicules satellites (4) peuvent être déterminés.

11. Véhicule combiné selon l'une quelconque de s revendications 5 à 10, **caractérisé en ce que** le véhicule maître (3) et/ou le véhicule satellite (4) comprennent des capteurs de vitesse de conduite au moyen desquels les vitesses de conduite respectives des deux véhicules peuvent être déterminées.

12. Véhicule combiné selon l'une quelconque des revendications 5 à 11, **caractérisé en ce que** le véhicule maître (3) et/ou le véhicule satellite (4) comprennent des moyens de suivi des traces, tel que, par exemple, une caméra avec analyse d'image ou un élément formant palpeur traceur pour suivre une trace/un sillon.

13. Véhicule combiné selon l'une quelconque des revendications 5 à 12 **caractérisé en ce que** le véhicule maître (3) et/ou le véhicule satellite (4) comprennent un système de navigation, tel que par exemple un GPS, à l'aide duquel la position du véhicule maître (3) et/ou du véhicule satellite (4) peut être définie.

14. Véhicule combiné selon l'une quelconque des revendications 5 à 13 **caractérisé en ce que** le véhicule satellite (4) est pourvu d'une caméra (7) et le véhicule maître (3) est pourvu d'un moniteur (8) qui reçoit les images en provenance de la caméra et les montre sur un écran.

15. Véhicule combiné selon la revendication 14 **caractérisé en ce que** près du côté avant et du côté arrière du véhicule satellite (4) est disposée une caméra (7).

16. Véhicule combiné selon l'une quelconque des revendications 5 à 15 **caractérisé en ce que** le véhicule satellite (4) est pourvu de moyens formant accouplement supplémentaires (10) à l'aide desquels les outils agricoles tels qu'un épandeur de fertilisants (11), une semeuse, u n pulvérisateur à cultures, une moissonneuse et une machine pour la fenaison peuvent être couplés au véhicule satellite (4).

17. Véhicule combiné selon l'une quelconque des revendications 5 à 16 **caractérisé en ce que** le véhicule combiné est pourvu d'un système de commande d'outil pour commander un outil, lequel système de commande est conçu de telle manière que d'autres outils également disposés sur le véhicule maître (3) et/ou un autre véhicule satellite peuvent être commandés par le système de commande d'outil approprié.
